# EUROPEAN PATENT SPECIFICATION

(11) **EP 2 826 972 B1**
(45) Date of publication and mention of the grant of the patent: **20.04.2016**
(21) Application number: 13176567.9
(22) Date of filing: 15.07.2013
(51) Int. Cl.: F01N 3/20, G01N 11/00

(54) **Method for monitoring urea quality of an SCR system**
Verfahren zur Überwachung der Harnstoffqualität eines SCR-Systems
Procédé de surveillance de qualité d'urée d'un système SCR

(43) Date of publication of application: 21.01.2015
(73) Proprietor: Inergy Automotive Systems Research (Société Anonyme), 1120 Bruxelles (BE)
(72) Inventor: Thompson, James Edward, Novi, MI 48375 (US); Habumuremyi, Jean-Claude, 9450 Haaltert (BE); Butler, Josh, Waterford, MI 48327 (US); Leonard, Stéphane, 1090 Brussels (BE); Jannot, Frédéric, 1470 Bousval (BE)
(74) Representative: Remy, Vincent Noel Paul

(56) References cited:
- DE-A1- 10 055 420
- US-A1- 2005 011 183
- US-A1- 2008 280 371
- US-A1- 2012 118 059

## Description

### TECHNICAL FIELD

The present invention relates to a method for determining fluid quality. In particular it relates to a method for sensing urea concentration/quality in a urea solution stored in a tank of a SCR system.

### BACKGROUND OF THE INVENTION

Legislation on vehicle and heavy goods vehicle emissions stipulates, amongst other things, a reduction in the release of nitrogen oxides NOₓ into the atmosphere. One known way to achieve this objective is to use the SCR (Selective Catalytic Reduction) process which enables the reduction of nitrogen oxides by injection of a reducing agent, generally ammonia, into the exhaust line. This ammonia may derive from the pyrolytic decomposition of an ammonia precursor solution, whose concentration may be the eutectic concentration. Such an ammonia precursor is generally a urea solution.

With the SCR process, the high levels of NOₓ produced in the engine during combustion at optimized efficiency are treated in a catalyst after exiting the engine. This treatment requires the use of the reducing agent at a precise concentration and of extreme quality. The solution is thus accurately metered and injected into the exhaust gas stream where it is hydrolysed before converting the nitrogen oxide (NOₓ) to nitrogen (N₂) and water (H₂O).

In order to do this, it is necessary to equip the vehicles with a tank containing an additive solution (generally an aqueous urea solution) and also a device for metering the desired amount of additive and injecting it into the exhaust line.

It is important to be able to measure urea concentration to ensure that the fluid in the tank is urea of acceptable concentration.

SCR systems today implement quality sensor technology. The introduction of a urea quality sensor into the SCR system ensures that a specific quality of urea can be injected into the exhaust line. It also reduces the risk of tampering or accidental mis-filling and helps ensure compliance, thus satisfying concerns of users and legislators alike.

Several urea quality sensors have been proposed.

For example, application US2008/280371 describes a urea quality sensor based on ultrasound speed (acoustic resonator) in the urea liquid. The speed of sound in urea solution can be used to measure the concentration, since the speed of sound in urea solution changes with the molecular weight of the urea solution. The change in the molecular weight of the urea solution, affects sound speed proportionally.

Other known urea quality sensors are based on capacitance or radiofrequency technology.

One shortcoming of these known urea quality sensors is that they generally require significant amount of packaging space. Moreover, it is difficult to place and use such a urea quality sensor in existing SCR systems where there is no dedicated space and dedicated electrical connections for the sensor. Another limitation is that the use of a urea quality sensor leads to the increase of the overall cost of the SCR system.

There is a need for a method that allows determining accurately the urea concentration in the urea solution for the satisfactory operation of the SCR process and that is compatible (i.e. usable) with all existing SCR systems.

### SUMMARY OF THE INVENTION

It is, therefore, one aspect of the present invention to provide for a method for determining, with enhanced accuracy and simplicity, the quality of a urea solution.

It is another aspect of the present invention to provide for a method for monitoring urea concentration in a urea solution stored in a tank of a SCR system, said system comprising a pump driven by a motor and the pressure of the pump is controlled by a controller. The method comprises the steps of:
- measuring a parameter value characteristic of the energy transmitted by the motor to the pump;
- determining a urea concentration value based upon the parameter value characteristic of the energy transmitted by the motor to the pump.

The idea behind the present invention is to calculate (i.e. determine) the urea concentration by monitoring the operation of the pump (for example, its rotational speed). The present invention is based on the observation that, for a given pump and under given operating conditions (for example, maintaining a constant pressure of the system at 5 bar), there is a direct correlation between the operation of the pump required to maintain the desired operating conditions and the urea concentration. The change in the composition of the urea solution (i.e. urea concentration) manifests as a change in viscosity of the urea solution (in certain cases, it can further manifest as a change in density of the urea solution). A change in viscosity of the urea solution affects the operation of the pump required to maintain the desired operating conditions.

It should be noted that depending on the type of pump and the regulation thereof, the parameter characteristic of the energy transmitted by the motor to the pump may be the rotational speed (for a rotary pump), the frequency (for a reciprocating pump), the current, the voltage, the torque,...or any combination of these parameters.

The pump to which the invention applies is a pump, preferably a positive-displacement pump, driven by a motor and the operation of which is generally controlled by a controller. It is preferably a rotary pump (gear or gerotor pump type) and hence generally comprises a stator and a rotor and can preferably operate in two opposite rotational directions, one generally corresponding to supplying the feed line with liquid and the other generally corresponding to a purge of the feed line. Preferably, the pump is a rotary pump and the parameter value characteristic of the energy transmitted by the motor to the pump is the pump rotational speed value. The invention hence gives good results with a gear pump.

In a particular embodiment, the rotational speed of the pump is measured by a Hall effect or other type of speed sensor.

In a preferred embodiment, the rotational speed of the pump is estimated by using back Electro-Motive Force (EMF) method. The back EMF method is well known in the art and is not further described hereafter.

Any type of electric motor may be suitable for driving the pump. Preferably, in the case of a gear pump, the motor is of the BLDC (brushless direct current) motor type. In this case, the pump is driven by a magnetic coupling between the rotor of the pump and the stator of the motor.

Preferably the gear pump is pressure regulated. In a particular embodiment, the controller is connected to a pressure sensor. This arrangement forms a closed loop pressure control mechanism. The controller compares, in a loop, a given pressure setpoint value with the value measured by the sensor and consequently acts on the rotational speed of the pump in order to attempt to stabilize the pressure at the pressure setpoint value.

The controller of the pump is a control module (generally comprising a PID regulator and a motor rotational speed controller) and an electric power supply unit which preferably supplies the motor with the power required to operate it at the desired speed and which enables its direction of rotation to be reversed, where necessary.

Preferably, the pump is also controlled by a PWM-type signal. Most particularly, an ECM (Electronic Control Module) sends, to the pump controller, a PWM (Pulse Width Modulation) control signal having a duty cycle that varies as a function of the desired operating conditions for the pump and according to which the controller acts on the motor to apply said operating conditions to the pump.

As explained previously, the present invention is applied to a SCR system, the purpose of which is to inject a pollution-control liquid into the exhaust gases of an internal combustion engine. Such a system generally comprises at least one tank for storing said liquid and a feed line enabling said liquid to be conveyed to the injector using the pump (placed in this line therefore). One liquid to which the present invention applies particularly well is urea.

The term "urea" is understood to mean any, generally aqueous, solution containing urea. The invention gives good results with eutectic water/urea solutions for which there is a standard quality: for example, according to the standard DIN 70070, in the case of the AdBlue® solution (commercial solution of urea), the urea concentration is between 31.8% and 33.2% (by weight) (i.e. 32.5 +/- 0.7 wt%) hence an available amount of ammonia between 18.0% and 18.8%. The invention may also be applied to the urea/ammonium formate mixtures, also in aqueous solution, sold under the trade name Denoxium™ and of which one of the compositions (Denoxium-30) contains an equivalent amount of ammonia to that of the Adblue® solution.

In one variant of the invention, the pump intentionally meters a too great amount of liquid, the excess of which is returned to the tank, for example using a return (or bypass) line equipped with a calibrated valve or a calibrated orifice. When no urea is injected into the exhaust gases of an engine, this variant makes it possible to cool the pump. Alternatively, the return line may start from the injector and it then makes it possible to cool said injector.

In another variant of the invention, the feed line is purged after each use of the pump (just before it is shut down) in order to reduce the starting time of the system and avoid prematurely damaging the lines (as the urea solutions expand when it freezes). The purge may be carried out, for example, by reversing the rotational direction of the pump just for the time necessary to convey the liquid contained in the feed line back to the tank.

As regards the return line, if present, it generally has a relatively low volume and therefore, if it is heated, it should not be purged while the pump is stopped. Therefore, to prevent the liquid from going round in circles in the loop defined by the feed line and the return line during the purge when this is carried out by reversing the rotational direction of the pump, it is advantageous to equip the return line with a non-return valve.

According to the invention, the monitoring of the urea concentration is carried out without disrupting the normal operation of the SCR system, i.e. the system constantly responds to a signal (generally transmitted by the onboard computer and/or the engine control unit (or ECU) and/or an electronic control module (ECM) specific to the SCR system that has an interface with the ECU) including information relating to the amount of urea solution that it is necessary to inject into the exhaust gases for controlling the pollution thereof and it is not necessary to initiate a test sequence which could significantly disrupt this operation.

In a preferred embodiment, the method includes generating a look-up table of pump rotational speed values versus urea concentration values. Preferably, such speed values are absolute or relative speed variations. Thereafter, the pump rotational speed value is compared to the look-up table in order to determine the urea concentration value. Preferably, the look-up table includes pump rotational speed values versus urea concentration values for a range of temperatures. For example, if the urea concentration falls outside a predetermined operating range or a predetermined threshold value(s), a signal can be sent to the onboard computer and/or the ECU and/or the ECM. In one example, if the urea concentration is lower than 26.5%, then a signal is sent to the ECU. In another example, the operating range may be set at 32.5 +/- 5 %.

In addition, the method of the present invention can be used in order to identify the solution is urea.

In a variant embodiment, the measurement technique of the present invention (measurement of urea concentration based, for example, on pump speed) can be used in combination with a sensor configured for measuring urea concentration. As it will be described later on, this sensor can also be configured for measuring the level of urea solution in the tank. Preferably, the sensor is an ultrasonic sensor. Other types of senor can be used, especially capacitance sensor. The idea behind this combination is to use the calculated (i.e. determined) urea concentration value and the measured urea concentration value for calibration and diagnostic purposes. In one advantageous embodiment, the measured urea concentration value can be used as a reference for calibrating the calculated urea concentration value. In this particular case, the measured urea concentration value allows, for example, to compensate for ageing of the system (pump wear, filter plugging, motor,...). In another advantageous embodiment, the calculated urea concentration value can be compared to the measured urea concentration value in order to check the plausibility of the calculated value. For example, if the difference between the calculated value and the measured value is greater than a predetermined threshold value, then a signal can be sent to the ECU and/or corrective actions can be initiated (for example, calibrating/recalculating the values of the look-up table). In another advantageous embodiment, the calculated urea concentration value can be compared to the measured urea concentration value in order to detect whether the sensor is functioning normally or whether the sensor is malfunctioning.

It is a further aspect of the present invention to provide for a SCR system comprising:
- a tank for storing a urea solution;
- a pump driven by a motor;
- a controller for controlling the pressure of the pump;
- a control module including logic means for measuring a signal representing a parameter value characteristic of the energy transmitted by the motor to the pump and logic means for determining a urea concentration value based upon the parameter value characteristic of the energy transmitted by the motor to the pump.

### BRIEF DESCRIPTION OF THE DRAWINGS

The present invention is illustrated, in a non limitative way, by the accompanying Figures 1 to 5.
Figure 1 is a schematic view of a particular embodiment of a SCR system to which the present invention may be applied;
Figure 2 depicts the result of measurements illustrating the correlation between pump speed and urea concentration that is at the key of a method according to one embodiment of the invention;
Figure 3 illustrates a flowchart of operations depicting logical operational steps for sensing the concentration of urea, in accordance with a particular embodiment of the invention.
Figures 4 and 5 illustrate schematically a particular embodiment of a urea delivery module.

### DETAILED DESCRIPTION

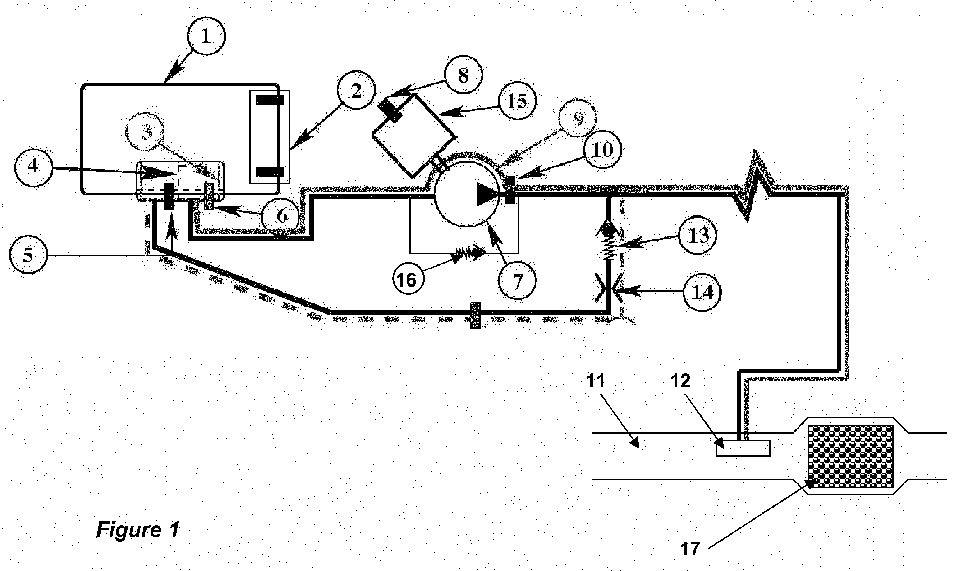

The same reference numerals are used to indicate the same elements (or functionally-similar elements) throughout the separate Figures 1 to 5.

Figure 1 illustrates a particular embodiment of a SCR system to which the present invention may be applied

The SCR system comprises a urea tank (1) containing a urea solution. The urea tank (1) is equipped with the following components:
- a gauge (2) (i.e. level sensor);
- a heating element (3);
- a filter (4);
- a temperature sensor (5); and
- a current sensor for the heating element (6).

The urea solution is conveyed by the action of a pump (7) towards an injector (12) located in a line (11) for discharging the exhaust gases of the engine of the vehicle, upstream of a SCR catalyst (17). The pump (7) is driven by a BLDC motor (15) and which is controlled by a controller (non illustrated). The controller can receive a signal (relative to the outlet pressure of the pump) measured by a pressure sensor (10) and a signal (relative to the rotational speed of the pump) measured by a speed sensor (8). For example, the control of the rotational speed of the motor (15) is achieved by sending, to the motor (15), a given voltage which may be in the form of a PWM voltage so that the outlet pressure of the pump follows a given pressure setpoint value. The SCR system comprises a non-return valve (16) that enables the pressure at the pump outlet to be regulated. The SCR system also comprises a heating filament (9) for the feed line and pump. The SCR system further comprises a return (or bypass) line equipped with:
- a non-return valve (13) that prevents the liquid from going round in circles (in the loop created by the feed line and that for return to the tank) during the purge (when the pump rotates in reverse); and
- a calibrated orifice (restriction) used to set the flow rate and to add resistance in order to increase the pressure (by increasing pressure drops in the return line).

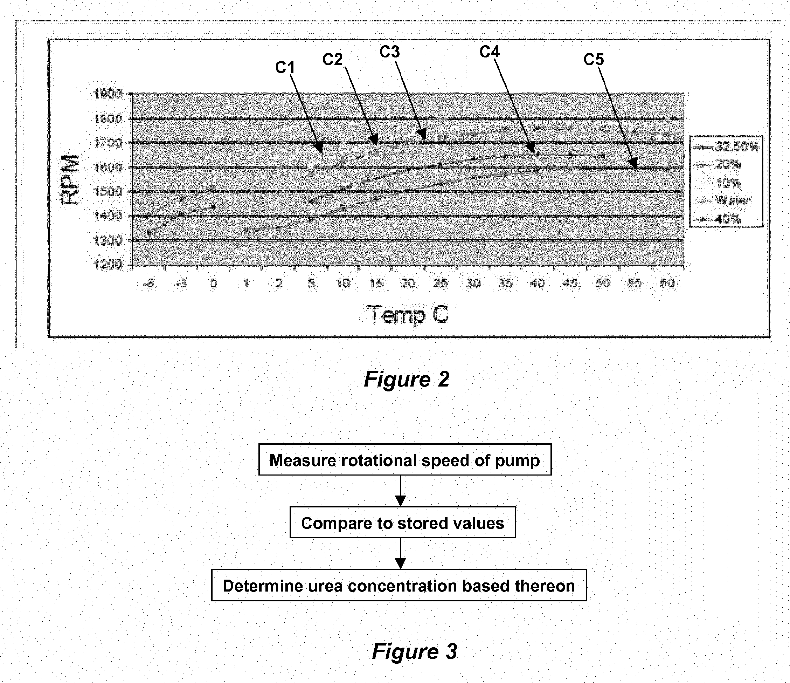

Figure 2 depicts an example of the result of speed/concentration measurements recorded during a test campaign on a system similar to that illustrated in Figure 1. The graph of Figure 2 illustrates the variation in pump speed with respect to changes in urea concentration, for a constant pressure regulation (for example, the system was stabilized by regulating the pressure at 5 bar). On this graph, shown on the x-axis is the temperature (in °C) and on the y-axis is the pump rotational speed (in rpm). On this graph, the curve C1 corresponds to a urea concentration of 0% (i.e. water), the curve C2 corresponds to a urea concentration of 10%, the curve C3 corresponds to a urea concentration of 20%, the curve C4 corresponds to a urea concentration of 32.5% (i.e. AdBlue® solution), and the curve C5 corresponds to a urea concentration of 40%. From the graph of Figure 2, it can be observed that the pump speed decreases as the urea concentration in the solution increases. This is mainly due to a change in viscosity of the solution that results of the increase of the urea concentration. It is a real advantage to be able to sense urea concentration by simply measuring the pump rotational speed (or any other parameter(s) characteristic of the energy transmitted by the motor to the pump), since no specific quality sensor is needed. There is no additional cost to the SCR system since the component(s) used for determining the urea concentration is(are) already present in the system.

A look-up table of pump rotational speed values versus urea concentration values can then be generated based on these speed/concentration measurements. For example, the look-up table can be stored in a memory comprised in the engine control unit (ECU) for use in the operation logic described below with reference to Figure 3.

The ECU includes a series of computer-executable instructions, as described below, which will allow the ECU to determine the concentration of the urea solution based on a rotational speed value of the pump. These instructions may reside, for example, in a RAM of the ECU. Alternatively, the instructions may be contained on a data storage device with a computer readable medium (for example, USB key or CD-ROM).

Figure 3 illustrates a flowchart of operations depicting logical operational steps for sensing the concentration of urea, in accordance with a particular embodiment of the invention. Commencing at block 31 the urea solution stored in the tank (1) is pumped by the pump (7) and the rotational speed of the pump is measured. For example, the rotational speed of the pump can be estimated by using back Electro-Motive Force (EMF) method. Continuing to block 32, the rotational speed of the pump measured at block 31 is compared to values stored in the ECU, e.g. the look-up table generated and stored as described above. At block 33, the urea concentration is then determined or interpolated from the look-up table.

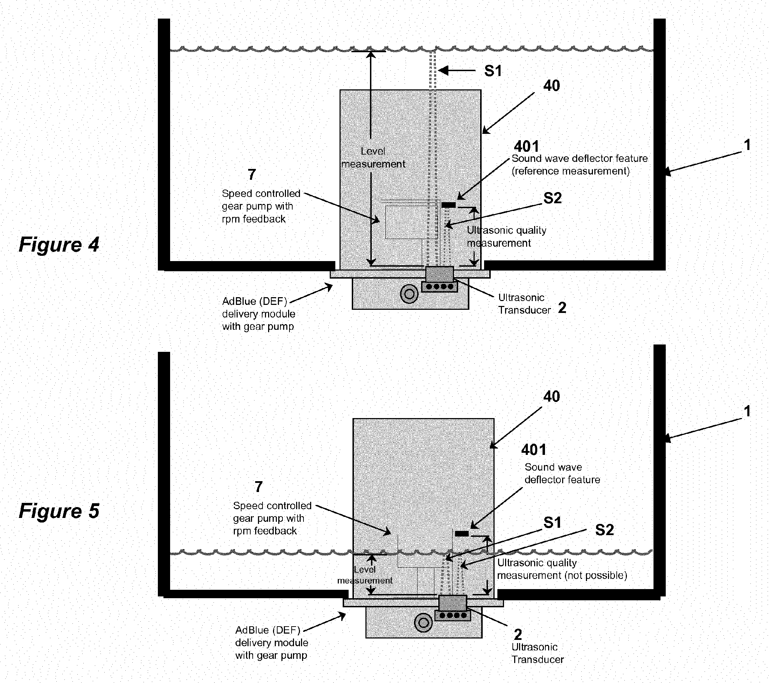

In an advantageous embodiment, the pump (7) and other components of the SCR system can be integrated in one module (called hereafter delivery module). Figures 4 and 5 illustrate schematically a particular embodiment of a delivery module. Advantageously, the delivery module (40) is configured to be fixed to the bottom face of the urea tank (1). In the embodiment illustrated in Figures 4 and 5, the delivery module (40) comprises the level sensor (2).

Preferably, the level sensor (2) is an ultrasonic sensor (piezo transducer). Advantageously, the ultrasonic sensor can be configured to measure both the level of urea solution in the tank and the urea concentration. Using ultrasonic technology is advantageous since it is a non-contact technology, meaning that it is possible not to have a through hole in the module, thus eliminate a potential leak path. Also, the ultrasonic level measurement can measure the full fluid height. Also, ultrasonic technology allows measuring level and concentration with a single sensor. In another embodiment, the ultrasonic sensor can be replaced by a capacitance sensor.

In a particular arrangement, the ultrasonic sensor can be mounted and positioned at the bottom of the delivery module in a manner such that it can take a horizontal measurement. However, this arrangement requires a significant amount of space in the tank and is expensive.

In a preferred arrangement, the ultrasonic sensor is mounted and positioned at the bottom of the delivery module in a manner such that it can take a vertical measurement. This preferred arrangement is illustrated in Figures 4 and 5. In this preferred arrangement, the ultrasonic sensor can measure the level of urea solution in the tank by sending a first sound wave signal (illustrated by the dotted line referenced S1 in Figures 4 and 5). The ultrasonic sensor can also measure the urea concentration by sending a second sound wave signal (illustrated by the dotted line referenced S2 in Figures 4 and 5). In the embodiment illustrated in Figures 4 and 5, the ultrasonic sensor (2) cooperates with a deflector (401). This deflector (401) is used to bounce the second sound wave signal (S2) back to the sensor. The deflector allows for a reference measurement. By having a fixed height it is possible to send an echo from the ultrasonic transducer to the deflector which will bounce back and then be measured by the sensor. Since it is a fixed height it is possible to measure the time of flight and based on the environmental conditions, it is possible to determine the density of the fluid. By this way, the concentration of urea can be determined.

Referring to Figure 4, the level of urea solution in the tank is above the deflector (401). In this case, the ultrasonic sensor can measure both the level of urea solution in the tank and the urea concentration. Advantageously, the measured urea concentration value is used in combination with the determined urea concentration value (based on the pump speed value, for example) for calibration and diagnostic purposes (as already described above).

Referring to Figure 5, the level of urea solution in the tank is below the deflector (401). In this case, the ultrasonic sensor can only measure the level of urea solution in the tank. In this case, the urea concentration is determined by comparing the pump rotational speed value to the look-up table. Below the deflector, the level measurement is less accurate. It is an advantageous aspect of the present invention to use the determined urea concentration value (based on the pump speed value, for example) to self-calibrate the ultrasonic sensor and to obtain a more accurate level measurement when the level of urea solution in the tank is below the deflector.

## Claims

1. A method for monitoring urea concentration in a urea solution stored in a tank of a SCR system, said system comprising a pump driven by a motor and the pressure of the pump is controlled by a controller, wherein the method comprises the steps of:
- measuring a parameter value characteristic of the energy transmitted by the motor to the pump;
- determining a urea concentration value based upon the parameter value characteristic of the energy transmitted by the motor to the pump.

2. The method according to claim 1, wherein the pump is a gear pump and the parameter value characteristic of the energy transmitted by the motor to the pump is the pump rotational speed value.

3. The method according to claim 2, wherein the controller is connected to a pressure sensor and wherein the controller compares, in a loop, a given pressure setpoint value with the value measured by the sensor and consequently acts on the rotational speed of the pump in order to attempt to stabilize the pressure at the pressure setpoint value.

4. The method according to any one of claims 2 and 3, wherein the rotational speed of the pump is measured by a speed sensor.

5. The method according to any one of claims 2 and 3, wherein the rotational speed of the pump is estimated by using back Electro-Motive Force method.

6. The method according to any one of claims 2 to 5, further comprising the steps of:
- generating a look-up table of pump rotational speed values versus urea concentration values;
- comparing the pump rotational speed value to the look-up table; and
- determining the urea concentration value based thereon.

7. The method according to claim 6, wherein the look-up table includes pump rotational speed values versus urea concentration values for a range of temperatures.

8. The method according to any one of claims 1 to 7, further comprising the steps of:
- measuring a urea concentration value by means of a sensor, and performing at least one of the following step:
- calibrating the determined urea concentration value by using the measured urea concentration value as a reference;
- comparing the determined urea concentration value and the measured urea concentration value, and determining the plausibility of the determined urea concentration value based upon the result of the comparison; and
- comparing the determined urea concentration value and the measured urea concentration value, and detecting a malfunction of the sensor based upon the result of the comparison.

9. The method according to claim 8, wherein the sensor is an ultrasonic sensor.

10. A SCR system, comprising:
- a tank for storing a urea solution;
- a pump driven by a motor;
- a controller for controlling the pressure of the pump;
- a control module including logic means for measuring a signal representing a parameter value characteristic of the energy transmitted by the motor to the pump and logic means for determining a urea concentration value based upon the parameter value characteristic of the energy transmitted by the motor to the pump.

## Patentansprüche

1. Verfahren zum Überwachen von Harnstoffkonzentration in einer Harnstofflösung, die in einem Behälter eines SCR-Systems gelagert wird, wobei das System eine von einem Motor angetriebene Pumpe umfasst und der Druck der Pumpe durch einen Regler geregelt wird, wobei das Verfahren die folgenden Schritte umfasst:
- Messen einer Parameterwerteigenschaft der von dem Motor auf die Pumpe übertragenen Energie;
- Bestimmen eines Harnstoffkonzentrationswerts auf der Grundlage der Parameterwerteigenschaft der von dem Motor auf die Pumpe übertragenen Energie.

2. Verfahren nach Anspruch 1, wobei die Pumpe eine Zahnradpumpe ist und die Parameterwerteigenschaft der von dem Motor auf die Pumpe übertragenen Energie der Drehzahlwert der Pumpe ist.

3. Verfahren nach Anspruch 2, wobei der Regler mit einem Drucksensor verbunden ist und wobei der Regler in einer Schleife einen vorgegebenen Druckeinstellwert mit dem von dem Sensor gemessenen Wert vergleicht und daraufhin auf die Drehzahl der Pumpe einwirkt, um zu versuchen, den Druck am Druckeinstellwert zu stabilisieren.

4. Verfahren nach einem der Ansprüche 2 und 3, wobei die Drehzahl der Pumpe von einem Drehzahlmesser gemessen wird.

5. Verfahren nach einem der Ansprüche 2 und 3, wobei die Drehzahl der Pumpe durch Nutzen eines gegenelektromotorische-Kraft-Verfahrens abgeschätzt wird.

6. Verfahren nach einem der Ansprüche 2 bis 5, ferner die folgenden Schritte umfassend:
- Erzeugen einer Nachschlagtabelle mit gegen Pumpendrehzahlwerte aufgetragenen Harnstoffkonzentrationswerten;
- Vergleichen des Pumpendrehzahlwerts mit der Nachschlagtabelle; und
- Bestimmen des Harnstoffkonzentrationswerts auf dieser Grundlage.

7. Verfahren nach Anspruch 6, wobei die Nachschlagtabelle gegen Pumpendrehzahlwerte aufgetragene Harnstoffkonzentrationswerte bei verschiedenen Temperaturen enthält.

8. Verfahren nach einem der Ansprüche 1 bis 7, ferner die folgenden Schritte umfassend:
- Messen eines Harnstoffkonzentrationswerts unter Einsatz eines Sensors und Ausführen wenigstens eines der folgenden Schritte:
- Kalibrieren des bestimmten Harnstoffkonzentrationswerts durch Verwenden des gemessenen Harnstoffkonzentrationswerts als ein Referenzwert;
- Vergleichen des bestimmten Harnstoffkonzentrationswerts und des gemessenen Harnstoffkonzentrationswerts und Bestimmen der Plausibilität des bestimmten Harnstoffkonzentrationswerts auf der Grundlage des Ergebnisses des Vergleichs; und
- Vergleichen des bestimmten Harnstoffkonzentrationswerts und des gemessenen Harnstoffkonzentrationswerts und Erkennen eines Fehlers des Sensors auf der Grundlage des Ergebnisses des Vergleichs.

9. Verfahren nach Anspruch 8, wobei der Sensor ein Ultraschallsensor ist.

10. SCR-System, Folgendes umfassend:
- einen Behälter zum Lagern einer Harnstofflösung;
- eine von einem Motor angetriebene Pumpe;
- einen Regler zum Regeln des Drucks der Pumpe;
- ein Steuermodul, einschließlich Logikmittel zum Messen eines Signals, das einen Parameterwert repräsentiert, der für die von dem Motor auf die Pumpe übertragene Energie charakteristisch ist, und Logikmittel zum Bestimmen eines Harnstoffkonzentrationswerts auf der Grundlage der Parameterwerteigenschaft der von dem Motor auf die Pumpe übertragenen Energie.

## Revendications

1. Procédé pour surveiller la concentration en urée dans une solution d'urée stockée dans le réservoir d'un système RCS, ledit système comprenant une pompe entraînée par un moteur électrique et la pression de la pompe étant commandée par un calculateur, dans lequel le procédé comprend les étapes consistant à :
- mesurer une valeur de paramètre caractéristique de l'énergie transmise par le moteur à la pompe ;
- déterminer une valeur de concentration en urée sur la base de la valeur de paramètre caractéristique de l'énergie transmise par le moteur à la pompe.

2. Procédé selon la revendication 1, dans lequel la pompe est une pompe à engrenages et la valeur de paramètre caractéristique de l'énergie transmise par le moteur à la pompe est la valeur de la vitesse de rotation de la pompe.

3. Procédé selon la revendication 2, dans lequel le calculateur est raccordé à un capteur de pression et dans lequel le calculateur compare, en boucle, un point de consigne de pression donné avec la valeur mesurée par le capteur et agit par conséquent sur la vitesse de rotation de la pompe afin de tenter de stabiliser la pression à la valeur du point de consigne de pression.

4. Procédé selon la revendication 2 ou 3, dans lequel la vitesse de rotation de la pompe est mesurée par un capteur de vitesse.

5. Procédé selon la revendication 2 ou 3, dans lequel la vitesse de rotation de la pompe est estimée au moyen du procédé de force contre-électromotrice.

6. Procédé selon l'une quelconque des revendications 2 à 5, comprenant en outre les étapes consistant à :
- créer une table de conversion entre valeurs de la vitesse de rotation de la pompe et valeurs de concentration en urée ;
- comparer la valeur de la vitesse de rotation de la pompe à la table de conversion ; et
- déterminer la valeur de la concentration en urée sur la base de cette comparaison.

7. Procédé selon la revendication 6, dans lequel la table de conversion comprend des valeurs de la vitesse de rotation de la pompe par rapport à des valeurs de concentration en urée pour une plage de températures.

8. Procédé selon l'une quelconque des revendications 1 à 7, comprenant en outre les étapes consistant à :
- mesurer une valeur de concentration en urée au moyen d'un capteur et effectuer au moins une des étapes suivantes :
- calibrer la valeur déterminée de concentration en urée en utilisant la valeur mesurée de concentration en urée comme référence ;
- comparer la valeur déterminée de concentration en urée et la valeur mesurée de concentration en urée et établir la vraisemblance de la valeur déterminée de concentration en urée sur la base du résultat de la comparaison ; et
- comparer la valeur déterminée de concentration en urée et la valeur mesurée de concentration en urée et détecter un dysfonctionnement du capteur sur la base du résultat de la comparaison.

9. Procédé selon la revendication 8, dans lequel le capteur est un capteur à ultrasons.

10. Système RCS comprenant :
- un réservoir pour stocker une solution d'urée ;
- une pompe entraînée par un moteur électrique ;
- un calculateur pour commander la pression de la pompe ;
- un module de commande comprenant des moyens logiques pour mesurer un signal représentant une valeur de paramètre caractéristique de l'énergie transmise par le moteur à la pompe et des moyens logiques pour déterminer une valeur de concentration en urée sur la base de la valeur de paramètre caractéristique de l'énergie transmise par le moteur à la pompe.
